# EUROPEAN PATENT APPLICATION

(11) **EP 2 079 197 A1**
(43) Date of publication of application: **15.07.2009**
(21) Application number: 07785281.2
(22) Date of filing: 08.08.2007
(51) Int. Cl.: H04L 12/56

(54) **A METHOD AND SYSTEM FOR COORDINATING THE SERVICES PROVIDED BY DIFFERENT SERVICE PROVIDERS**

(30) Priority: 13.10.2006 CN 200610140900
(71) Applicant: Huawei Technologies Co., Ltd., Longgang District, Shenzhen Guangdong 518129 (CN)
(72) Inventor: PAN, Qiuling, Shenzhen Guangdong 518129 (CN); ZHAO, Yang, Shenzhen Guangdong 518129 (CN)
(74) Representative: Körber, Martin Hans
(86) International application number: PCT/CN2007/002371
(87) International publication number: WO 2008/046287

(57) **Abstract**

A method and system for coordinating the services provided by different service providers comprise: the service adaptation distributing center SADC obtaining the service request from the sender, then converting the service request to the form supported by the receiver based on the associated service data of the receiver and sending the service request to the receiver; after the receiver provides the corresponding service result according to the service request, the SADC sends the service result to the sender. By the method or system, when the service provided to the mobile user by the service provider and the service requested by the user is not consistent, other services can be provided to the user, then the services provided for the mobile users by different service providers are coordinated and the existing Parlay component is arranged to the OSE environment developed in recent years. Furthermore, the uniform interface is provided to the up-layer application entity.

## Description

### FIELD OF THE INVENTION

The present invention relates to the field of communications, and in particular, to a technology for coordinating services provided by different service providers.

### BACKGROUND OF THE INVENTION

With the vigorous development of telecommunication services, each carrier gradually transforms from a simple voice carrier to a comprehensive information carrier. During the transforming process to a comprehensive information carrier, the carrier is in urgent need of a large amount of and abundant services or information. However, with the development and deepening of the service, more and more characteristics and complexities are presented in the services. To reduce the interaction and complexities among services and meet people's increasing demands, it is highly needed for a technology of normalizing the discovery/interaction mechanism among services.

At present, Open Service Architecture/Parlay (OSA/Parlay) mechanism and Open Systems Environment (OSE) mechanism based on Open Mobile Alliance (OMA) enabler environment for providing services are widely used in the industry.

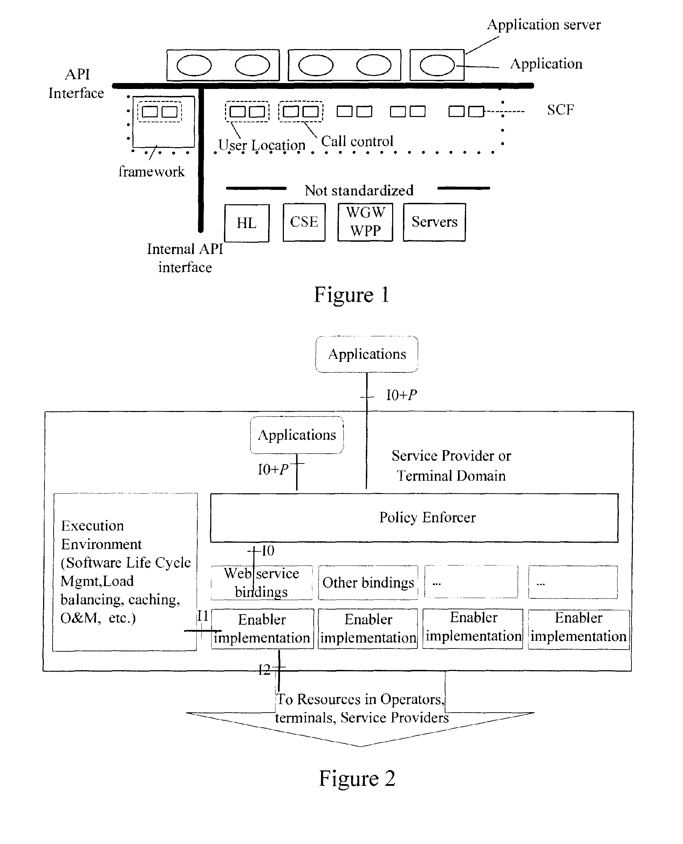

The application architecture of OSA/Parlay mechanism is as shown in Figure 1, which includes an Application Server, a Parlay gateway and an Application Programming Interface (API). The Parlay gateway consists of a Framework and one or more Service Capability Features (SCFs). The SCF is an abstract of functions provided by the network. The API locates between the Application Server and the Parlay gateway, using such an open and standard interface, service developers and Independent Software Vendors (ISVs) and the like may have the capability to use the existing network resources, and new services may be developed easily and flexibly, therefore providing customers with required services.

The Application Server is provided by a third-party service provider or network carrier for developing various services to be used by terminal users. The Parlay gateway includes a Parlay Server, which provides the support of various basic service capabilities to a Parlay client, so that the services of the Parlay client may enter into each communication networks safely and controllably. The Parlay client accesses the Parlay Server by calling the API, and distributed object technologies including Common Object Request Broker Architecture (CORBA), WEB Service, JAVA Advanced Intelligent Network Service Provider APIs (JAIN SPA) may be employed for communication between the Parlay Server and the Parlay client.

The OSE mechanism puts forward by OMA Organization is another technology for providing open services, which provides a layered, modularized and open service generation and execution environment, thus meeting the requirements for developing a fast, effective and low-cost service. In the OSE mechanism, the original perpendicular service model "Silo" is discarded; the services are classified to constitute various enablers (for example, presence, location, device management and multimedia message, etc.) to be managed and employed in the OSE execution environment. The application architecture of the OSE mechanism is shown in Figure 2, which includes: an execution environment, various enablers, a policy enforcer and underlayer network resources. In particular, the various enablers obtain the underlayer network resources via I2 interface and generate a service using the underlayer network resources; the execution environment manages the services in the various enablers via I1 interface; and each of the enabler provides an I0 interface to connect the policy enforcer, for obtaining policy information. The policies defined by the carrier or the terminal user are also considered while the intrinsic functions of each enabler are implemented.

With the development of OSE technology, many enterprises in the industry start to do research on a technology that converges the capabilities of both OSA/Parlay and OSE, so that the capabilities of both OSA/Parlay and OSE may be compatible on the basis of the original OSA/Parlay technology or in a service network deployed in the future, which provides a wider basis for service development and service combination, and a more uniform encapsulation capability may be provided, thus repeated development and the like may be avoided. On the other hand, the service capabilities supported by service providers in the OSA/Parlay architecture and the OSE architecture may be inconsistent. Therefore, in order to realize joint configurations, different service providers should be capable of processing a same service request so as to coordinate the services provided to a mobile user by different service providers.

The technology related to the invention is configuring Initial Filter Criteria (iFC) in an IP Multimedia System (IMS) network to realize different service providers processing a same service request. However, such a mode in which the core network is configured does not conform to the concept of independent and layered service, and limits the flexibility of service environment; simultaneously, complex iFC configurations increase the network load and lower the service processing efficiency of the whole network. Moreover, as services increase, the frequent modification of iFC may easily cause the network instability and great hidden troubles.

### SUMMARY OF THE INVENTION

Embodiments of the invention provide a method and a system for coordinating services provided by different service providers. With the invention, different service providers in different architectures may all provide a corresponding service to a user, so that the service may be developed in a more abundant and flexible way.

The embodiments of the invention are implemented in the following technical solutions.

A method for coordinating services provided by different service providers in an embodiment of the invention includes the following:

After obtaining a service request from a sending end, a Service Adaptor/Dispatcher Center (SADC) transfers the service request into a standard form supported by the receiving end according to the related service data of the receiving end and then delivers the service request to the receiving end.

A system for coordinating services provided by different service providers in an embodiment of the invention includes:
a sending end, for sending a service request; and
a Service Adaptor/Dispatcher Center (SADC), for transferring the service request into a standard form supported by a receiving end according to the related service data of the receiving end and then delivering the service request to the receiving end, after obtaining the service request from the sending end.

A Service Adaptor/Dispatcher Center (SADC) in an embodiment of the invention, includes an information transmission unit and a service switching unit, wherein:
the information transmission unit is adapted to receive a service request from a sending end and deliver it to the service switching unit, and to send a transferred service request from the service switching unit to a receiving end; and
the service switching unit is adapted to transfer the service request into a standard form supported by the receiving end according to the related service data of the receiving end and then deliver it to the information transmission unit, upon obtaining the service request from the sending end.

It can be seen from the above technical solutions of the invention that, after obtaining a service request from a sending end, an SADC transfers the service request into a standard form supported by a receiving end according to the related service data of the receiving end and then delivers the service request to the receiving end. Therefore, with the invention, different service providers in different architectures may all provide a corresponding service to a user, and services provided to a user by different service providers in different architectures may be coordinated, thus may be developed in a more abundant and flexible way. For example, the deployment and provision of services provided to a mobile user based on Parlay and OSE technologies may be coordinated, thus the existing Parlay components may be configured in the OSE developed in recent years. As a result, resources may be saved to protect the carriers' investment, and the service development may be implemented in a more abundant and flexible way.

Additionally, in the invention, a uniform interface may be provided to an upper-layer application by modifying, by an SADC, the form of interaction information between a service provider and the upper-layer application.

### BRIEF DESCRIPTION OF THE DRAWINGS

Figure 1 is an architecture diagram of the OSA/Parlay mechanism in the prior art;

Figure 2 is an architecture diagram of the OSE mechanism in the prior art;

Figure 3 is a flow chart of a first embodiment of the invention;

Figure 4 is a flow chart showing a processing flow when a client acting as a service requestor subscribes for a Presence service and all the service providers support the Presence service in the first embodiment of the invention;

Figure 5 is a flow chart showing a processing flow when an SADC modifies the related data in an SIP request message according to the related service data supported by the service provider in the first embodiment of the invention;

Figure 6 is a flow chart of a second embodiment of the invention;

Figure 7 is a flow chart showing a processing flow when a client acting as a service requestor subscribes for a Presence service but a service provider does not support some functions in Presence service;

Figure 8 is a flow chart of a third embodiment of the invention;

Figure 9 is a structural diagram of a fifth embodiment of the invention; and

Figure 10 is a structural diagram of a sixth embodiment of the invention.

Explanation of term(s):

PAM: Presence and Availability Management.

### DETAILED DESCRIPTION OF THE EMBODIMENTS

In the embodiments of the invention, in order to coordinate services provided by different service providers, a Service Adaptor/Dispatcher Center (SADC) is provided between a service requestor acting as a sending end and a service provider acting as a receiving end, and/or between a service provider acting as a sending end and an upper-layer application acting as a receiving end.

When the SADC is provided between a service requestor acting as a sending end and a service provider acting as a receiving end, because the form supported by the service requestor is the same as the form supported by the service provider, the SADC is mainly used for processing the inconsistency between the service contents requested by the service requestor and the service contents supported by the service provider. After a service request message reaches the SADC, the SADC selects an appropriate service provider based on policy control according to the service contents requested in the service request message from the service requestor and other attached information, such as number segment and so on, and transfers the service request that is not supported by the service provider according to the service data of the receiving end, and then sends the service request message that conforms to the standard form to the selected service provider; the service provider returns a corresponding result of service. In this way, when some service functions in the service provided by the service provider to the mobile user are inconsistent with those in the service requested by the mobile user, other service functions in the service requested by the mobile user may continue to be provided. When the service provided by a service provider to the mobile user is inconsistent with the service requested by the mobile user, the SADC may terminate the service request instead of transferring the service request.

When the SADC is provided between a service provider acting as a sending end and an upper-layer application of a service provider acting as a receiving end, the service contents supported by the service provider are consistent with the service contents supported by the upper-layer application of the service provider, and the service provider knows the service technology employed by the upper-layer application. When the service technology employed by the service provider is different from that employed by the upper-layer application, the formats supported by them may be different; for example, the form supported by a service provider employing OSA/Parlay technology is a function form, while the form supported by an upper-layer application employing OSE technology is a message form. In this case, the SADC is mainly used for transferring a service request that does not conform to the form of the service request supported by the upper-layer application and then sending the service request message that conforms to the standard form to the upper-layer application. Thus, a uniform interface may be provided to the upper-layer application of the service provider.

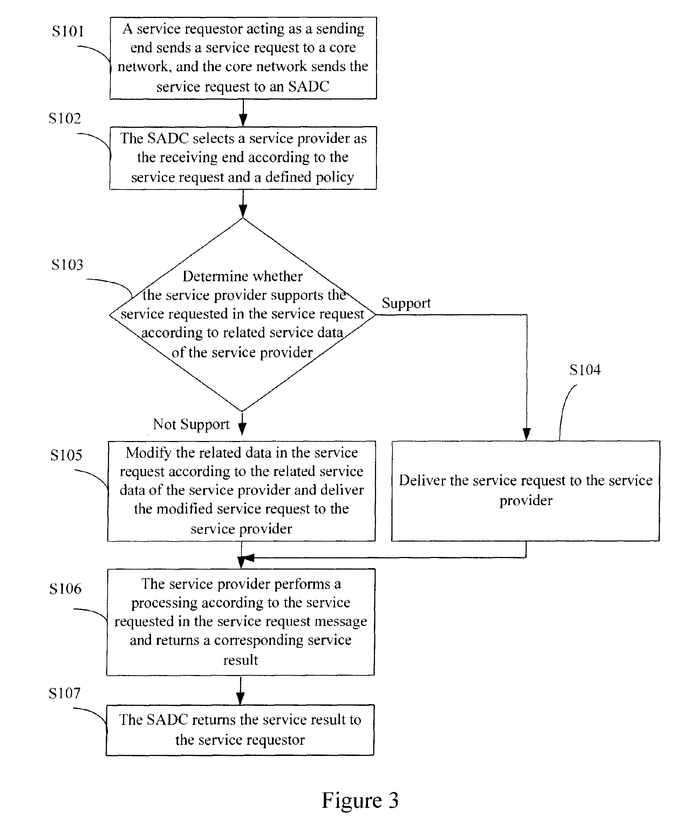

In the first embodiment of the invention, there provides a method for coordinating services provided by different service providers. In this embodiment, the SADC selects a service provider according to the received service request and the defined policy, and then determines whether the service provider supports the service requested in the service request according to the related service data of the service provider acting as a receiving end, if the service provider supports the service, the SADC delivers the service request to the service provider; if not, the SADC modifies the contents of the message in the service request according to the related service data of the service provider, and then delivers the modified service request to the corresponding service provider. The specific implementation process of this embodiment is shown in Figure 3, which includes the following:

In Step S101, a service requestor acting as a sending end sends a service request to the core network, and the core network forwards the service request to an SADC.

The destination address carried in the request message is the address of the SADC. The service request further includes message contents such as service data, and information including a number used by the service requestor, priority level of the service requestor and/or load balancing principle.

In Step S102, the SADC selects a service provider as the receiving end according to the service request and the defined policy.

The defined policies include: matching principle between number segment and service provider, matching principle between priority level and service provider, and/or load balancing principle.

The SADC matches the information in the defined policy with the information such as the number used by the service requestor, the priority level of the service requestor and/or the load balancing principle contained in the service request, when matched, the SADC selects a service provider as the receiving end according to the principle corresponding to the matched policy information.

In Step S103, the SADC determines whether the service provider, such as Parlay gateway and OSE enabler, supports the service requested in the service request according to the related service data of the service provider; if yes, it proceeds to Step S104; otherwise, it proceeds to Step S105.

In Step S104, the SADC delivers the service request to the service provider, and then it proceeds to Step S106.

In Step S105, the SADC modifies the related data in the service request according to the related service data of the service provider and then delivers the modified service request to the service provider, and then it proceeds to Step S106.

In Step S105, when determining that the service provider does not support the service requested in the service request, the SADC modifies the related data in the service request message into the message contents supported by the service provider according to the related service data of the service provider. The SADC may obtain the related service data of the service provider in two modes:

Mode 1: the service data supported by the service provider is pre-stored in the SADC, and the SADC obtains the service data from the service provider periodically and updates the pre-stored service data with the obtained service data ;

Mode 2: upon obtaining the service request from the service requestor, the SADC then obtains the related service data in the service provider by querying according to the service request.

In Step S106, the service provider performs a processing according to the service requested in the service request message and returns a corresponding service result.

When an SADC is provided between the service provider and its upper-layer application, in Step S106, after the service provider receives a service request message, the SADC may modify the form of the service request message into a form supported by the upper-layer application of the service provider and then send the modified service request message to the upper-layer application of the service provider. Then the upper-layer application of the service provider provides a corresponding service result. It can be seen that with the processing performed by the SADC, a uniform interface may be provided to the upper-layer application.

Alternatively, in Step S106, the service provider may not modify the form of the service request message. In this case, it is difficult to unify the upper-layer application connected with different service providers, thus the upper-layer service application has to be modified.

In Step S107, the SADC returns the service result to the service requestor.

In Step S107, the service result is carried in certain messages by the SADC. Before sending the messages, the SADC needs to modify the contents of the messages into the contents of the messages supported by the service requestor and then sends to the service requestor.

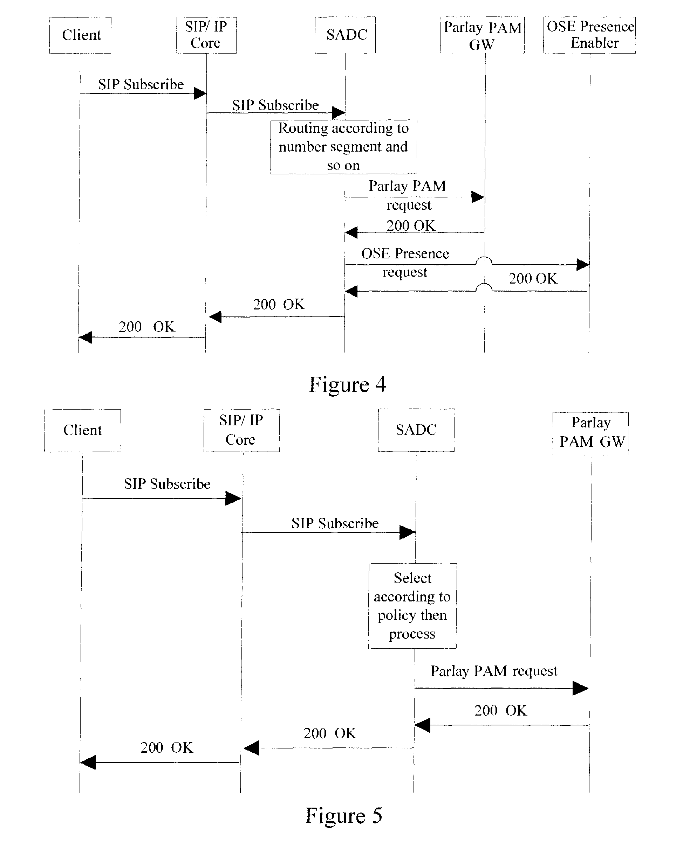

The first embodiment of the invention will now be illustrated in detail by taking an example that the client of the service requestor acting as a sending end subscribes for a Presence service and the service provider such as the Parlay gateway or the OSE enabler acting as a receiving end supports the Presence service, as shown in Figure 4:

First of all, the client of the service requestor that acts as a sending end sends an SIP request message for subscribing a Presence service to the core network, SIP/IP Core, and the destination address carried in the request message is the address of the SADC. The request message further includes Presentity subscription information, and the message contents that Trigger Event is a Presence service and the like, and information of number segment used by the service request.

Then, the SIP/IP Core forwards the SIP subscription request message to the SADC according to the destination address carried in the SIP subscription request message.

Then, the SADC tries to match the number segment in the defined policy with the number used by the service request; if it matches, the SADC selects a service provider as the receiving end according to the principle in the defined policy. The selected service provider may be Parlay gateway or OSE enabler.

Then, the SADC determines whether the service provider supports the requested Presence service according to the service data supported by the selected service provider, and after learning that the service provider supports the requested service, the SADC modifies the destination address carried in the SIP request message and sends the SIP request message to the service provider.

The service provider returns an SIP response message 200 OK, in which the corresponding service result is carried, to the SADC according to the SIP request message.

The SADC returns the SIP response message 200 OK to the SIP/IP Core.

The SIP/IP Core returns the SIP response message 200 OK to the client.

The processing in which the service provider does not support the service requested by the service requestor is mainly directed to the case that the service data supported in Parlay architecture is inconsistent with that supported in OSE architecture. For example, the Presence service in OSE architecture supports Filtering function, i.e. the presented information of Presentity can be configured. However, early Parlay gateway does not support such Filtering function (or other functions, such as Partial Notification and Partial Publication). In this case, when a client in the OSE domain sends a subscription message for subscribing the information of Parlay Presence service provided with filtering function, if the Parlay gateway does not support the Parlay Presence service provided with the filtering function, an inconsistent processing of the service occurs. Then, the SADC needs to modify the related data in the SIP request message according to the related service data supported by the service provider. As shown in Figure 5, the specific implementation process includes:

The client of the service requestor acting as a sending end sends an SIP subscription request message. The destination address carried in the SIP subscription request message is the address of the SADC. The service request further includes message contents such as service data, and information containing a number used by the service requestor, priority level of the service requestor and/or load balancing principle.

The core network SIP/IP Core sends the SIP subscription request message to the SADC;

The SADC selects the Parlay gateway as the service provider according to the SIP subscription request message and a defined policy. The specific implementation process is the same as the related description in the above mentioned, and will not be described in detail here.

Then, the SADC determines that the Parlay gateway does not support filtering function according to the related service data of the service provider, the Parlay gateway; therefore, the SADC removes the information that requires filtering function from the SIP subscription request message to make the SIP request message consistent with the message contents supported by the Parlay gateway.

Then, the SADC sends the modified SIP subscription request message to the Parlay gateway;

The Parlay gateway returns an SIP response message 200 OK to the SADC.

The SADC returns an SIP response message 200 OK to the SIP/IP Core.

The SIP/IP Core returns the SIP response message 200 OK to the client.

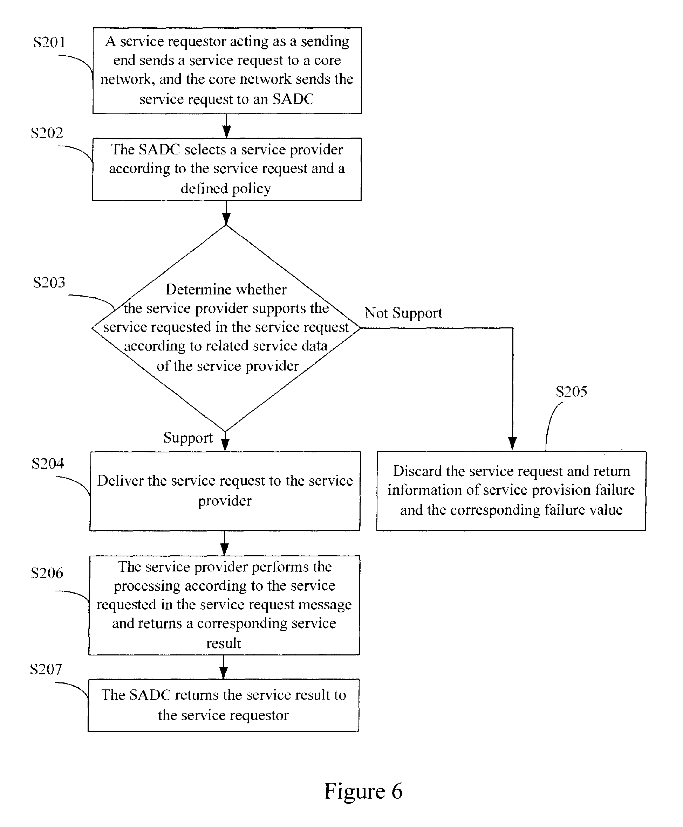

In the second embodiment of the invention, there provides another method for coordinating services provided by different service providers. In this embodiment, the SADC selects a service provider as the receiving end according to the received service request and the defined policy, and then determines whether the service provider supports the service requested in the service request according to the related service data of the service provider, if the service provider supports the service, the SADC delivers the service request to the service provider; if not, the SADC discards the service request and returns failure information and the corresponding failure code. After the service request reaches the service provider acting as the receiving end, the service provider modifies the form of the service request into a form supported by the upper-layer application of the service provider, according to the service data supported by the upper-layer application, and then sends it to the upper-layer application. The upper-layer application and the service provider interact with each other and complete the service jointly. The specific implementation process of this embodiment is as shown in Figure 6, which includes:

In Step S201, a service requestor acting as a sending end sends a service request to the core network, and the core network forwards the service request to an SADC.

The destination address carried in the request message is the address of the SADC. The service request further includes message contents such as service data, and information containing a number used by the service requestor, priority level of the service requestor and/or load balancing principle.

In Step S202, the SADC selects a service provider as the receiving end according to the service request and a defined policy. The policy information contained in the defined policy and the specific implementation of Step S202 are the same as the related description in the first embodiment, and will not be described in detail here.

In Step S203, the SADC determines whether the service provider, such as Parlay gateway or OSE enabler, supports the service requested in the service request according to the related service data of the service provider, if yes, it proceeds to Step S204; otherwise, it proceeds to Step S205, i.e. discards the service request and returns information of service provision failure and the corresponding failure code.

In Step S204, the SADC delivers the service request to the service provider, and then it proceeds to Step S206.

In Step S206, the service provider performs a corresponding processing according to the service requested in the service request message and returns a corresponding service result.

When an SADC is provided between the service provider and its upper-layer application, in Step S206, after receiving the service request message, the SADC may modifies the form of the service request message into a form supported by the upper-layer application of the service provider, and then send the modified service request message to the upper-layer application of the service provider. Then, the upper-layer application of the service provider exchanges information with the service provider to complete the service jointly, and then returns a corresponding service result. It can be seen that after the processing performed by the SADC, a uniform interface may be provided to the upper-layer application.

Alternatively, in Step S206, the service provider may not modify the form of the service request message. However in this case, it is difficult to unify the upper-layer application connected with different service providers, thus the upper-layer service application needs to be modified.

In Step S207, the SADC returns the service result to the service requestor.

In Step S207, the SADC carries the service result in certain messages, and before sending the message, the SADC modifies the contents of the messages into the contents of the messages supported by the service requestor and then sends the messages to the service requestor.

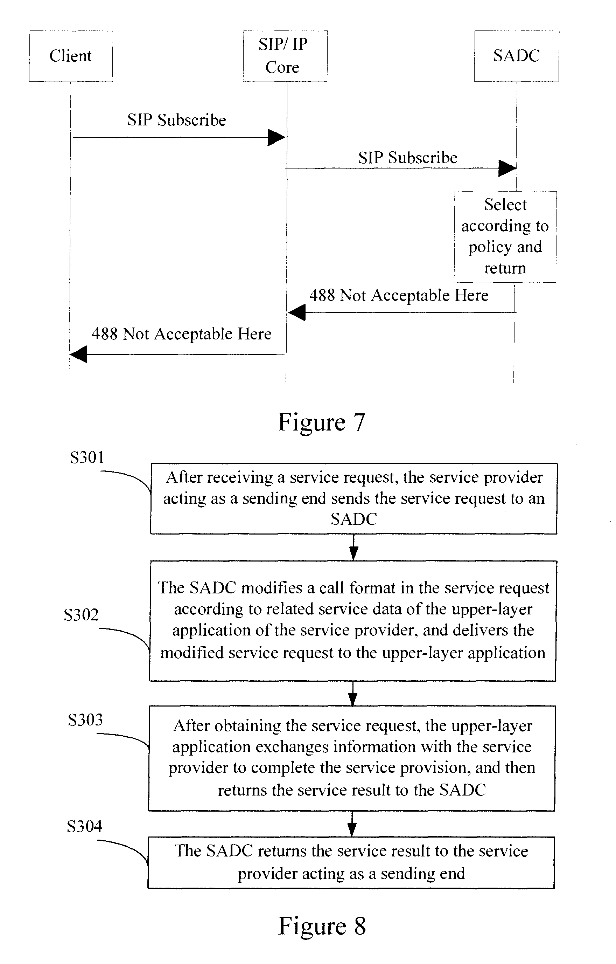

The second embodiment of the invention will now be illustrated in detail by taking an example that a client acting as a service requestor subscribes for a Presence service and the service provider does not support some functions in the Presence service, as shown in Figure 7:

The client of the service requestor that acts as a sending end sends an SIP subscription request message for subscribing a Presence service with a filtering function;

A core network SIP/IP Core sends the SIP subscription request message to an SADC;

The SADC selects Parlay gateway as the service provider according to a defined policy;

Then, the SADC determines that the Parlay gateway does not support the filtering function according to the related service data of the service provider, i.e. the Parlay gateway, so it discards the SIP subscription request message and returns the information of service provision failure and the corresponding failure code to the SIP/IP Core.

The SIP/IP Core returns the information of failure and the corresponding failure code to the client.

In the third embodiment of the invention, there provides a third method for coordinating services provided by different service providers. In this embodiment, after obtaining a service request from a service provider acting as a sending end, an SADC transfers the service request into the form supported by the upper-layer application of the service provider according to the related service data of the upper-layer application of the service provider acting as a receiving end, and then delivers the service request to the upper-layer application of the service provider. The specific implementation process of this embodiment is as shown in Figure 8, which includes:

In Step S301, after receiving a service request, the service provider acting as a sending end sends the service request to an SADC.

In Step S302, the SADC modifies the form in the service request according to the related service data of the upper-layer application of the service provider, and delivers the modified service request to the upper-layer application.

For example, if the upper-layer application is an application employing OSE technology while the service provider is a Parlay gateway employing OSA/Parlay technology, the form supported by the Parlay gateway in the service request message needs to be transferred into the form supported by the upper-layer application.

Taking the subscription function of Presence service as an example, if a function form of a Parlay gateway is:
SubscribePresence(SubscribePresenceRequest, SubscribeResponse)

In particular, the request message SubscribePresenceRequest includes the following two parameters:
Presentity(xsd:anyURI)
Attributes (PresenceAttributeType)

then, after transferred into a message form, the obtained service request for the subscription function of the OSE Presence service is as follows:
SUBSCRIBE sip:user2@soho.com SIP/2.0
Via: SIP/2.0/UDP user1.huawei.com;branch=z9hG4bKnashds7
Max-Forwards: 70
From: <sip:user1@ soho.com>;tag=31415
To: <sip:user2@ soho.com>
Call-ID: b89rjhnedirfjflslj40a222
CSeq: 61 SUBSCRIBE
Event: presence
Expires: 7200
Accept: application/pidf+xml
Contact: user1. soho.com
Content-Type: application/simple-filter+xml
Content-Length: ...

Presentity (xsd:anyURI), corresponding to <sip:user2@ soho.com> of the Presence subscription message in OSE, provide the address of the Presentity of the Presence service; Attributes (PresenceAttributeType), corresponding to Content-Type: application/simple-filter+ xml in the Presence subscription message in OSE, designate the type of the Presence information subscribed.

In Step S302, the SADC obtains the related service data of the upper-layer application of the service provider in two modes:

Mode 1: the service data supported by the upper-layer application of the service provider is pre-stored in the SADC; the SADC periodically obtains the corresponding service data from the upper-layer application of the service provider, and then updates the pre-stored service data with the obtained service data.

Mode 2: After obtaining a service request from a service provider acting as a sending end, the SADC obtains the related service data in the upper-layer application of the service provider by querying according to the service request.

In Step S303, after obtaining the service request, the upper-layer application exchanges information with the service provider to complete the service provision, and then returns the service result to the SADC.

In Step S304, the SADC returns the service result to the service provider acting as a sending end.

In Step S304, the SADC carries the service result in certain messages, and before sending the message, the SADC modifies the form of the message into a form supported by the service requestor, and then sends the message to the service provider acting as the sending end.

In the fourth embodiment of the invention, there provides a system for coordinating services provided by different service providers, which includes a sending end, a receiving end and an SADC.

After obtaining a service request from the sending end, the SADC transfers the service request into a standard form supported by the receiving end according to the related service data of the receiving end and then delivers the service request to the receiving end; after the receiving end provides a service result according to the service request, the SADC sends the service result to the sending end.

When the sending end is the service requestor and the receiving end is the service provider, the system may further include a core network, for forwarding a service request sent from the service requestor acting as the sending end to the SADC, and for forwarding a service result returned by the SADC to the service requestor. In such a case, the signal delivery relations among each components in the system are as follows:

the service requestor acting as the sending end sends a service request message to a core network, and the core network forwards the service request message to an SADC via network core components;

after obtaining the service request of the service requestor, the SADC selects a service provider according to a defined policy, and then determines whether the service provider supports the functions in the service requested in the service request according to the related service data of the service provider acting as the receiving end, if the service provider supports the functions, the SADC forwards the service request message to the service provider. The specific implementation process is the same as the related description in the first embodiment of the invention, and will not be described in detail here.

If the selected service provider does not support some functions in the service requested in the service request, the service request is transferred in two measures:

Measure 1: modifying the contents in the service request message received, and discarding the service functions in the service request message that are not supported by the service provider, then delivering the modified service request message to the service provider. The specific implementation process is the same as the related description in the first embodiment of the invention, and will not be described in detail here.

Measure 2: discarding the service request message, and returning information of service provision failure and a failure code. The specific implementation process is the same as the related description in the second embodiment of the invention, and will not be described in detail here.

The SADC sends the service result to the service requestor.

When the sending end is the service provider and the receiving end is the upper-layer application of the service provider, the signal delivery relations among each components in the system are as follows:

After receiving a service request, the service provider acting as the sending end sends the service request to the SADC;

the SADC modifies the form in the service request according to the related service data of the upper-layer application of the service provider and delivers the modified service request to the corresponding upper-layer application. The processing process in which the SADC obtains the related service data of the upper-layer application is the same as the related description in the third embodiment, and will not be described in detail here.

After obtaining the service request, the upper-layer application exchanges information with the service provider to complete the service provision, and then returns the service result to the SADC.

The SADC returns the service result to the service provider acting as the sending end. The specific implementation process is the same as the related description in the first embodiment, and will not be described in detail here.

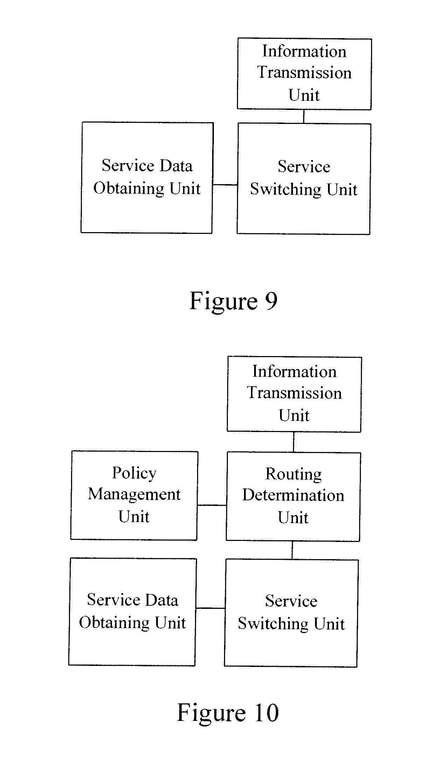

In the fifth embodiment of the invention, there provides an SADC, which includes a service switching unit and an information transmission unit, as shown in Figure 9.

When no service data information supported by the service provider is saved in the SADC, the SADC may further include a service data obtaining unit.

The service data supported by the upper-layer application of a service provider acting as a receiving end is stored in the service data obtaining unit, and the service data obtaining unit obtains the service data from the receiving end periodically and updates the stored service data with the obtained service data. Or, after the service request reaches the SADC, the SADC obtains, via the service data obtaining unit, the related service data in the receiving end by querying according to the service request.

When the service request from the service provider acting as the sending end reaches the SADC, upon receiving the service request, the information transmission unit delivers the service request to the service switching unit.

The service switching unit modifies the service request into a form supported by the upper-layer application of the service provider according to the service data of the upper-layer application of the service provider, and delivers the modified service request to the upper-layer application of the service provider. The specific processing process of the SADC is the same as the related description in the third embodiment of the invention, and will not be described in detail here.

The upper-layer application of the service provider interacts with the service provider acting as a sending end according to the received service request, provides a corresponding service result according to the interacted information, and returns the service result to the SADC.

After the service switching unit modifies the form of the message carrying the service result into a form supported by the service provider acting as a sending end, the SADC sends out the message by the information transmission unit.

In the sixth embodiment of the invention, there provides an SADC, which includes a policy management unit, a routing determination unit, a service switching unit and an information transmission unit, as shown in Figure 10. When no service data information supported by the service provider is stored in the SADC, the SADC may further include a service data obtaining unit.

The policy management unit manages some defined policy information. The detailed description of the defined policy information is the same as the related description in the first embodiment, and will not be described in detail here.

The service data supported by the service provider acting as a receiving end is stored in the service data obtaining unit, and the service data obtaining unit periodically obtains the service data from the receiving end and updates the stored service data with the obtained service data. Or, after the service request reaches the SADC, the service data obtaining unit obtains the related service data in the service provider acting as a receiving end by querying according to the service request.

After the service request reaches the SADC, the routing determination unit selects a service provider as the receiving end according to the policy information in the policy management unit, and then informs the service switching unit of the selected service provider.

The service switching unit determines whether the service provider supports the service requested in the service request; if the service provider supports the service, the service switching unit delivers the service request to the service provider; if not, the service switching unit modifies the contents of the service request into the message content supported by the service provider according to the service data of the service provider, and delivers the modified service request to the service provider. The specific processing process of the SADC is the same as the related description in the first embodiment of the invention, and will not be described in detail here.

The service provider provides a corresponding service result according to the received service request and returns the service result to the SADC.

After the service switching unit modifies the contents of the message carrying the service result into the message contents supported by the service requestor acting as a sending end, the SADC sends out the message.

Some of the above processing processes are illustrated by taking a Presence service as an example, but the invention is not limited to the Presence service. Instead, the invention may be further applied to any services provided by Parlay and OSE, such as Location service and Policy service. Moreover, the invention is not limited to a system in which OSA/Parlay and OSE technologies coexist; instead, the invention may be further applied to other systems, such as ParlayX system, in which the same problem exists in the service providers with different service provision capabilities.

It can be seen from the specific implementing solutions provided in the above embodiments of the invention that, after obtaining a service request from a service requestor, an SADC transfers the service request into a form supported by a receiving end according to the related service data of the receiving end and delivers the service request to the receiving end. Therefore, with the invention, services provided to a mobile user by different service providers may be coordinated. For example, the deployment and provision of services provided to a mobile user based on Parlay and OSE technologies may be coordinated, thus the existing Parlay components may be configured in the OSE developed in recent years, and applications that have been developed may be protected to apply a new enabler. As a result, resources may be saved to protect the carriers' investment; moreover, services may be developed in a more flexible and abundant ways.

Additionally, in the embodiments of the invention, the service request message may be modified via an SADC so as to avoid inconsistency of the services provided to a mobile user.

Additionally, in the embodiments of the invention, a uniform interface may be provided to an upper-layer application by modifying, via an SADC, the form of the information interacted between a service provider and the upper-layer application.

Obviously, various modifications and varieties may be made by those skilled in the art without departing from the spirit and scope of the invention. Therefore, providing those modifications and varieties of the invention falls within the scope of the invention defined by the claims and equivalence thereof, it is intended to be included within the scope of the invention.

## Claims

1. A method for coordinating services provided by different service providers, comprising:
transferring, by a Service Adaptor/Dispatcher Center, SADC, a service request into a form supported by a receiving end according to related service data of the receiving end after obtaining the service request from a sending end, and delivering the service request to the receiving end.

2. The method according to claim 1, wherein, the service request comprises a form, and the process of transferring the service request into a form supported by a receiving end according to the related service data of the receiving end and delivering the service request to the receiving end comprises:
transferring, by the SADC, the form in the service request into a form supported by the receiving end according to the related service data of the receiving end, and delivering the service request to the receiving end.

3. The method according to claim 1, wherein, the service request comprises service contents, and the process of transferring the service request into a form supported by a receiving end according to the related service data of the receiving end and delivering the service request to the receiving end comprises:
transferring, by the SADC, the contents in the service request into message contents supported by the receiving end according to the related service data of the receiving end and delivering the service request to the receiving end.

4. The method according to claim 3, further comprising:
selecting, by the SADC, a receiving end according to the service request and defined policy after obtaining the service request from a sending end.

5. The method according to claim 3, wherein, the process of transferring the contents in the service request into message contents supported by the receiving end according to the related service data of the receiving end and delivering the service request to the receiving end comprises:
determining, by the SADC, whether the receiving end supports the service requested by the service request according to the related service data of the receiving end; transferring the contents in the service request into message contents supported by the receiving end if determining that the receiving end does not support the service requested by the service request; and delivering the service request to the receiving end; or
determining, by the SADC, whether the receiving end supports the service requested by the service request according to the related service data of the receiving end; and delivering the service request to the receiving end if determining that the receiving end supports the service requested in the service request.

6. The method according to any one of claims 1 to 5, further comprising:
obtaining, by the SADC, the related service data in the receiving end by querying according to the service request after obtaining the service request from the sending end; or
storing, by the SADC, the service data supported by the receiving end, obtaining service data from the receiving end and updating the stored service data with the obtained service data.

7. The method according to claim 6, further comprising:
receiving, by the SADC, a service request from the core network, wherein the service request is from the sending end.

8. A system for coordinating services provided by different service providers, comprising:
a sending end, for sending a service request;
a Service Adaptor/Dispatcher Center, SADC, for transferring the service request into a form supported by a receiving end according to related service data of the receiving end after obtaining the service request from the sending end, and delivering the service request to the receiving end.

9. The system according to claim 8, further comprising a core network, for forwarding the service request sent by the sending end to the SADC and forwarding a service result returned by the SADC to the sending end.

10. A Service Adaptor/Dispatcher Center, SADC, comprising an information transmission unit and a service switching unit, wherein:
the information transmission unit is adapted to receive a service request from a sending end and deliver it to the service switching unit, and send the transferred service request sent by the service switching unit to the receiving end; and
the service switching unit is adapted to transfer the service request into a form supported by the receiving end according to related service data of the receiving end after obtaining the service request from the sending end, and to deliver it to the information transmission unit.

11. The SADC according to claim 10, further comprising:
a service data obtaining unit, adapted to obtain the related service data in the receiving end by querying according to the service request after obtaining the service request from the sending end; or adapted to store the service data supported by the receiving end, obtain service data from the receiving end and update the stored service data with the obtained service data.

12. The SADC according to claim 10 or 11, wherein, the service switching unit is further adapted to transfer a form in the service request into a form supported by the receiving end according to the related service data of the receiving end after the SADC obtains the service request from the sending end, and to deliver the service request to the information transmission unit.

13. The SADC according to claim 10 or 11, further comprising a policy management unit and a routing determination unit, wherein:
the policy management unit is adapted to manage defined policy information; and
the routing determination unit is adapted to select a receiving end according to the policy information in the policy management unit.

14. The SADC according to claim 13, wherein, the service switching unit is further adapted to determine whether the receiving end supports the service requested by the service request according to the related service data of the receiving end selected by the routing determination unit; to transfer the contents in the service request into message contents supported by the receiving end and to deliver the service request to the information transmission unit if determining that the receiving end does not support the service requested by the service request; or to deliver the service request to the information transmission unit if determining that the receiving end supports the service requested in the service request.
